# EUROPÄISCHE PATENTSCHRIFT

(11) **EP 1 402 193 B1**
(45) Veröffentlichungstag und Bekanntmachung des Hinweises auf die Patenterteilung: **23.03.2005**
(21) Anmeldenummer: 02751069.2
(22) Anmeldetag: 25.06.2002
(51) Int. Cl.: F16D 25/10

(54) **SCHALTELEMENT-BAUGRUPPE FÜR EIN GETRIEBE**
SHIFT ELEMENT SUB-ASSEMBLY FOR A TRANSMISSION
MODULE D'ELEMENTS DE COMMUTATION POUR UNE TRANSMISSION

(30) Priorität: 30.06.2001 DE 10131816
(43) Veröffentlichungstag der Anmeldung: 31.03.2004
(73) Patentinhaber: ZF FRIEDRICHSHAFEN AG, 88038 Friedrichshafen (DE)
(72) Erfinder: BIERMANN, Eberhard, 88214 Ravensburg (DE); GIERER, Georg, 88079 Kressbronn (DE)
(86) Internationale Anmeldenummer: PCT/EP2002/006983
(87) Internationale Veröffentlichungsnummer: WO 2003/004893

(56) Entgegenhaltungen:
- DE-A- 19 932 614
- FR-A- 1 434 704
- US-A- 4 966 270

## Beschreibung

Die Erfindung betrifft eine Schaltelement-Baugruppe für ein Getriebe, nach dem Oberbegriff des Hauptanspruchs, siehe DE-A-38 19 702, sowie ein Verfahren zur Steuerung dieser Schaltelement-Baugruppe.

Schaltelement-Baugruppen für Getriebe, insbesondere für Automatgetriebe oder automatisierte Schaltgetriebe, sind vielfältig bekannt. So beschreibt die DE 199 32 614 A1 eine Anordnung von zwei als Bremse ausgebildeten axial benachbarten Schaltelementen für ein Stufenautomatgetriebe. Hierbei ist für beide Bremsen ein gemeinsamer Außenlamellenträger vorgesehen, der formschlüssig mit einem Getriebegehäuse verbunden ist und eine mittige Trennwand axial zwischen den beiden Bremsen aufweist. Jeweils unmittelbar links und rechts von der Trennwand sind die Kolben zur hydraulischen Betätigung der jeweiligen Bremse angeordnet, wobei eine der Bremsen über einen Doppelkolben mit zwei Druckkammern betätigt wird. Auf kleinerem Durchmesser als der Innendurchmesser der Lamellen, radial unterhalb der Lamellenreibflächen, weist jede Bremse ein als Tellerfeder ausgebildetes Rückstellelement auf.

Friedrich J. EHRLINGER / Walter KUHN "Das automatische ZF-Getriebe HP 500", in ATZ Automobiltechnische Zeitschrift 79(1977)10 S.463-466, offenbart eine gattungsgemäße Schaltelement-Baugruppe eines Stufenautomatgetriebes, mit zwei axial benachbarten Getriebebremsen, die voneinander unabhängig hydraulisch betätigbar sind. Für diese beiden Bremsen ist ein gemeinsamer Lamellenträger zur Aufnahme der Außenlamellen beider Bremsen vorgesehen. Die Lamellen beider Bremsen sind axial benachbart innerhalb des Lamellenträgers angeordnet und durch eine mittige Trennwand des Lamellenträgers voneinander getrennt. Beide Bremsen weisen jeweils einen Kolben zur hydraulischen Betätigung auf, welcher jeweils auf der der Trennwand abgewandten Seite der Lamellen der jeweiligen Bremse angeordnet ist. Radial oberhalb der Lamellen beider Bremsen ist ein als Spiralfederpaket ausgebildetes gemeinsames Rückstellelement für beide Kolben vorgesehen. Die Lüftspieleinstellung beider Bremsen erfordert eine Ausmessung der tatsächlichen Einbaumaße im Getriebegehäuse.

Es ist Aufgabe der Erfindung, ausgehend vom genannten Stand der Technik eine Schaltelement-Baugruppe mit zwei axial benachbarten, voneinander unabhängig hydraulisch oder pneumatisch betätigbaren Schaltelementen hinsichtlich möglichst geringem Bauraum und hinsichtlich Montagefreundlichkeit weiterzuentwickeln.

Gelöst wird diese Aufgabe durch eine Schaltelement-Baugruppe mit den Merkmalen des Hauptanspruchs. Vorteilhafte Ausgestaltungen der Erfindung, sowie Verfahren zur Steuerung der erfindungsgemäßen Schaltelement-Baugruppe ergeben sich aus den Unteransprüchen.

Ausgehend vom genannten Stand der Technik weist die Schaltelement-Baugruppe zwei in einem Getriebegehäuse angeordnete, axial benachbarte Schaltelemente auf, die voneinander unabhängig hydraulisch oder pneumatisch betätigbar sind. Ein für beide Schaltelemente gemeinsamer Lamellenträger nimmt die Außenlamellen oder die Innenlamellen beider Schaltelemente auf. Die Lamellen beider Schaltelemente sind axial benachbart innerhalb des Lamellenträgers angeordnet und durch eine mittige Trennwand des Lamellenträgers voneinander getrennt. Jedes Schaltelement weist mindestens einen Kolben und einen Schließdruckraum zur hydraulischen bzw. pneumatischen Betätigung auf, welcher auf der der Trennwand abgewandten Seite der Lamellen des jeweiligen Schaltelementes angeordnet ist.

Erfindungsgemäß weist jedes Schaltelement mindestens ein Rückstellelement zur Kolbenrückstellung auf, welches in einer entsprechend ausgebildeten Ausnehmung im Lamellenträger radial oberhalb der Lamellen des jeweiligen Schaltelementes angeordnet ist, und mindestens ein Rückstellelement der Schaltelement-Baugruppe ist als hydraulisch oder pneumatisch betätigbarer Entleerdruckraum ausgebildet. Beide Schaltelemente weisen zur Betätigung jeweils zusätzlich zu dem Kolben einen Sekundärkolben auf. Die Kolben sind axial unmittelbar neben dem Lamellenträger angeordnet sind, jeweils links und rechts von dessen Stirnseiten. Der Betätigungsdruck im Schließdruckraum des jeweiligen Schaltelementes wirkt direkt auf dessen Kolben, welcher alsdann eine Kraft auf den Sekundärkolben des jeweiligen Schaltelementes ausübt, der wiederum - gegen die Kraft des zugeordneten Rückstellelementes - eine Betätigungskraft auf die Lamellen des jeweiligen Schaltelementes ausübt.

Beide Sekundärkolben sind also derart ausgebildet, daß einerseits eine Übertragung des Betätigungsdruckes im jeweiligen Schließdruckraum über den zugeordneten Kolben auf die Lamellen des jeweiligen Schaltelementes möglich ist, und daß andererseits die Rückstellkraft des zugeordneten Rückstellelementes über den Sekundärkolben auf den Kolben des jeweiligen Schließdruckraums wirkt. Hierzu münden die Sekundärkolben axial verschiebbar in die Ausnehmungen im Lamellenträger ein, in denen auch die Rückstellelemente angeordnet sind. Der axiale Verschiebeweg der Sekundärkolben ist jeweils durch einen Einstellring im Lamellenträger begrenzt, derart, daß hierdurch das konstruktiv vorgegebene Lüftspiel des entsprechenden Schaltelementes eingestellt ist. Zweckmäßigerweise ist dazu im Lamellenträger eine hinreichend breite Nut vorgesehen, das Lüftspiel wird dann über eine an die tatsächlichen Bauteilabmessungen und Bauteiltoleranzen angepaßte Einstellringbreite eingestellt. Im geöffneten Zustand des Schaltelementes befindet sich dessen Sekundärkolben also - infolge der Rückstellkraft des zugeordneten Rückstellelementes - in einer Endlage, die durch den Einstellring vorgegeben ist, wodurch die Lamellen des Schaltelementes das vorgegebene Lüftspiel aufweisen.

In besonders vorteilhafter Weise ist also der Lamellenträger zusammen mit den Lamellen, den Rückstellelementen und den Sekundärkolben beider Schaltelemente als ein Baugruppenteil vormontierbar. Beim Komplettieren der ganzen Schaltelement-Baugruppe in dem Getriebegehäuse ist eine sonst übliche Nachmessung der tatsächlichen Einbaumaße der Schaltelemente im eingebauten Zustand im Getriebegehäuse nicht mehr erforderlich, um die tatsächlichen Lüftspiele zu ermitteln. Bei einer ggf. erforderlichen Korrektur der Lüftspiele auf die konstruktive vorgegebene Werte entfällt die notwendige Rückmontage der Schaltelemente aus dem Getriebegehäuse. Somit wird also eine erhebliche Montageerleichterung und eine entsprechende Kostenreduzierung erzielt. Infolge der hohen Leistungsdichte der hydraulischen bzw. pneumatischen Kolbenrückstelleinrichtung kann die Schaltelement-Baugruppe außerdem in vorteilhafter Weise konstruktiv sehr kompakt und bauraumsparend ausgeführt werden.

In einer besonders bauraumsparenden Ausführungsform der Erfindung wird vorgeschlagen, die Rückstellelemente beider Schaltelemente jeweils als Entleerdruckraum auszubilden. Hierbei können beide Schaltelemente voneinander unabhängig hydraulisch oder auch pneumatisch geöffnet werden, wobei die Schließdruckräume, welche bei geschlossenen Schaltelementen mit Druck beaufschlagt sind, beim Öffnen entlüftet werden.

Die Schaltelemente der Baugruppe können als Getriebekupplung oder als Getriebebremse ausgebildet sein. In einer vorteilhaften Ausgestaltung der Erfindung sind beide Schaltelemente als Bremsen ausgebildet, wobei der gemeinsame Lamellenträger der beiden Bremsen als Außenlamellenträger ausgebildet und formschlüssig oder auch kraftschlüssig mit dem Getriebegehäuse verbunden ist, und wobei beide Schließdruckräume durch eine entsprechende Gehäusegestaltung direkt durch das Getriebegehäuse gebildet werden.

Zweckmäßigerweise erfolgt die Druckbeaufschlagung des entsprechenden Entleerdruckraums zum Öffnen des jeweiligen Schaltelementes über ein elektrohydraulisches Getriebe-Steuergerät, über welches auch der Schließvorgang des Schaltelementes gesteuert wird. Dabei kann das hydraulische bzw. pneumatische Öffnen des Schaltelementes insbesondere schaltungsspezifisch und/oder temperaturabhängig steuerbar sein.

Als günstige Ausführungsform der Entlüftung des bei geschlossenem Schaltelement mit Druck beaufschlagten Schließdruckraums wird vorgeschlagen, mindestens eine Entleerblende vorzusehen, um den Druckabbau in diesem Schließdruckraum zu beeinflussen. In einer anderen Ausführungsform der Entlüftung kann auch vorgesehen sein, daß der Druckabbau elektrohydraulisch beeinflußbar ist, also daß der Druckabbau in dem entsprechenden Schließdruckraum über eine elektrohydraulische Steuerung aktiv steuerbar ist, insbesondere schaltungsspezifisch und/oder temperaturabhängig.

Das erfindungsgemäße hydraulische bzw. pneumatische Öffnen des Schaltelementes bzw. beider Schaltelemente kann auch durch Federkraft unterstützt sein, wobei das entsprechende Schaltelement dann zwei parallel wirkende Rückstellelemente aufweist. Günstig ist eine Kombination dieser Ausführungsform mit einer aktiven Steuerung des Druckabbaus im entsprechenden Schließdruckraum. Eine entsprechende Federauslegung vorausgesetzt, kann dann durch die Federkraft auch im drucklosen Zustand des Getriebes ein Zurückfahren des Betätigungskolbens in seine Ausgangsposition sichergestellt, wobei die Federkraft zweckmäßigerweise möglichst niedrig eingestellt wird. Durch die Druckbeaufschlagung des Entleerdruckraumes und den gesteuerten Druckabbau im Schließdruckkaum des entsprechenden Schaltelementes kann das Öffnen des Schaltelementes in vorteilhafter Weise sehr feinfühlig gesteuert werden, beispielsweise mit schaltungsabhängig unterschiedlichen Öffnungszeiten zur Komfort-Optimierung von Überschneidungsschaltungen oder zur Erhöhung der Spontanität von Schaltungsabläufen.

In einer Weiterbildung der Erfindung wird vorgeschlagen, den Schließdruckraum und den Entleerdruckraum als Differenzdruckraum auch beim Schließen des jeweiligen Schaltelementes druckmoduliert anzusteueren, vorzugsweise schaltungsabhängig. In vorteilhafter Weise ist hierdurch das entsprechende Schaltelement besonders feinfühlig ansteuerbar, beispielsweise beim Schalten sehr geringer oder auch. stark unterschiedlicher Drehmomente. Das Doppelkolbenprinzip an sich ist beispielsweise aus der DE 199 32 614 A1 bekannt. Gegenüber diesem Stand der Technik ist jedoch durch die erfindungsgemäße Ausführung des Rückstellelementes als Entleerdruckraum, dessen Entleerdruck gegen einen Schließdruck wirkt, kein zusätzliches Bauteil notwendig. Selbstverständlich ist eine solche Differenzdrucksteuerung von Schließdruckraum und Entleerdruckraum auch beim Öffnen des Schaltelementes einsetzbar, beispielsweise zum feinfühlichen Lösen des Kraftschlusses bei sehr geringen Differenzmomenten am zu öffneneden Schaltelement.

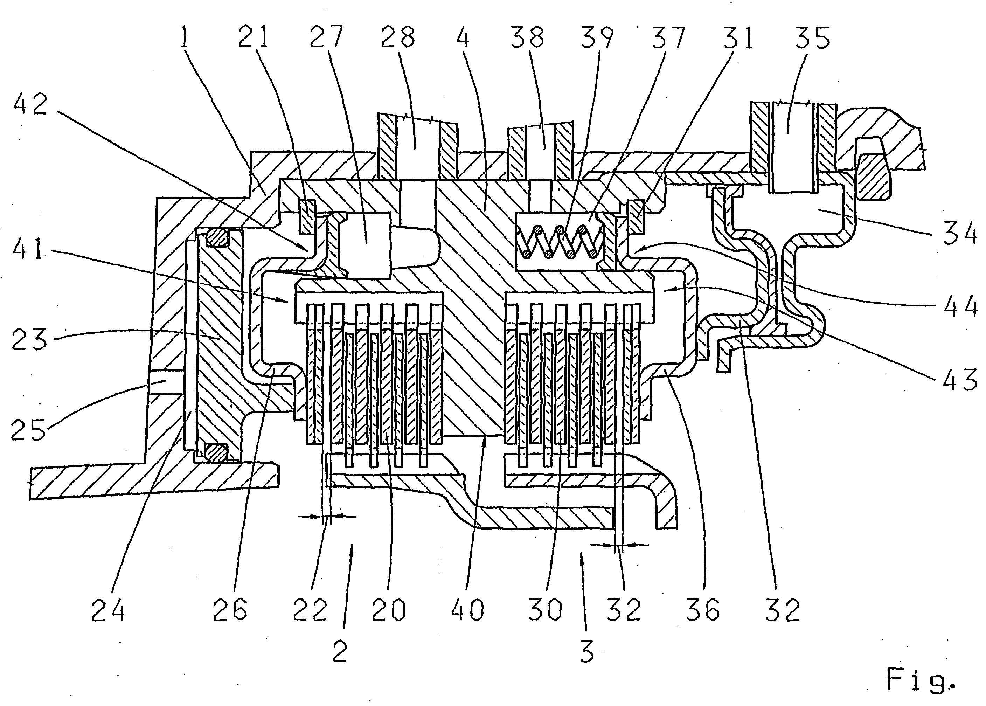

Im folgenden wird die Erfindung anhand der einzigen Figur näher erläutert, in der ein vorteilhaftes Ausführungsbeispiel einer erfindungsgemäßen Schaltelement-Baugruppe als schematischer Teilschnitt dargestellt ist.

Mit 1 ist ein Getriebegehäuse bezeichnet, in dem ein erstes Schaltelement 2 und ein zweites Schaltelement 3 angeordnet ist. Beide Schaltelemente 2 und 3 sind im dargestellten Ausführungsbeispiel als Bremse ausgebildet. Beiden Schaltelementen 2, 3 ist ein gemeinsamer Lamellenträger 4 zugeordnet, der im Ausführungsbeispiel als Außenlamellenträger ausgebildet ist und die Außenlamellen 20 des ersten Schaltelementes 2 und die Außenlamellen 30 des zweiten Schaltelementes in entsprechend ausgebildeten Mitnahmverzahnungen axial verschiebbar aufnimmt. Die Lamellen der beiden Schaltelemente 2, 3 sind axial benachbart innerhalb des gemeinsamen Lamelllenträgers 4 angeordnet und durch eine mittige Trennwand 40 des Lamellenträgers 4 voneinander getrennt.

Die Schaltelemente 2, 3 sind voneinander unabhängig hydraulisch oder pneumatische betätigbar. Hierzu ist für das erste Schaltelement 2 ein Schließdruckraum 24 vorgesehen, der in die Bauteil-Struktur des Getriebegehäuses 1 integriert ist und über eine Schließdruck-Zuführung 25 mit Druck beaufschlagbar ist. Der Schließdruck ist vorzugsweise über ein elektro-hydraulisches oder elektro-pneumatisches Getriebe-Steuergerät modulierbar, beispielsweise in Abhängigkeit der Schaltungsart, des zu übertragenden Drehmomentes, der Schaltdrehzahl und/oder der Temperatur. Der Druck im Schließdruckraum 24 wirkt direkt auf einen Kolben 23 des ersten Schaltelementes 2. Der Kolben 23 wiederum wirkt auf einen Sekundärkolben 26 des ersten Schaltelementes 2, der Sekundärkolben 26 dann auf die Lamellen des ersten Schaltelementes 2. Schließdruckraum 24, Kolben 23 und Sekundärkolben 26 sind im Bereich einer ersten Stirnseite 41 des Lamellenträgers 4 angeordnet. Zum Schließen des ersten Schaltelementes 2 wird also der Schließdruckraum 24 mit Druck beaufschlagt und der Sekundärkolben 26 über den Kolben 23 gegen eine Rückstellkraft eines Rückstellelementes 27 axial in Richtung der Lamellen des ersten Schaltelementes verschoben, sodaß dessen Lamellen Drehmoment übertragen können.

Als Rückstellelement des ersten Schaltelementes 2 ist ein hydraulisch oder pneumatisch betätigbarer Entleerdruckraum 27 vorgesehen, der in einer radialen Ausnehmung 42 an der ersten Stirnfläche 41 des Lamellenträgers 4 angeordnet ist, radial oberhalb der Lamellen des ersten Schaltelementes 2, also auf größerem Durchmesser als die Lamellen. Der Entleerdruckraum 27 ist über eine Entleerdruck-Zuführung 28 mit Druck beaufschlagbar, vorzugsweise drückmoduliert über das elektro-hydraulische bzw. elektro-pneumatische - Getriebe-Steuergerät, beispielsweise in Abhängigkeit der Schaltungsart und/oder der Temperatur.

Ein zum Druckaufbau im Entleerdruckraum 27 parallel erfolgender Druckabbau im Schließdruckraum 24 kann beispielsweise über eine oder mehrere Blenden beeinflußt sein. Insbesondere zur Temperaturkompensation des Öffnungsverhaltens kann der Druckabbau im Schließdruckraum 24 auch über das elektro-hydraulische bzw. elektro-pneumatische Getriebe-Steuergerät druckmoduliert steuerbar sein.

In einer Weiterbildung der Erfindung kann vorgesehen sein, daß das Schließen und/oder das Öffnen des ersten Schaltelementes 2 über eine Differenzdrucksteuerung von Schließdruckraum 24 und Entleerdruckraum 27 erfolgt, insbesondere schaltungstypabhängig zu einem besonders feinfühligen Schalten bei sehr kleinen und bei stark unterschliedlichen Schaltmomenten.

Der Sekundärkolben 26 des ersten Schaltelementes 2 weist einen zylinderförmigen Abschnitt auf, der in dieselbe radiale Ausnehmung 42 an der ersten Stirnfläche 41 des Lamellenträgers 4 axial verschiebbar einmündet, in der auch der Entleerdruckraum 27 des ersten Schaltelementes 2 angeordnet ist. Der axiale Verschiebeweg des Sekundärkolbens 26 ist durch einen Einstellring 21 begrenzt, welcher in einer entsprechend ausgebildeten Nut im Lamellenträger 4 im Bereich dessen erster Stirnfläche 41 angeordnet ist, derart, daß sich der Sekundärkolben 26 im geöffneten Zustand des ersten Schaltelementes 2 - infolge der Rückstellkraft des Entleerdruckraums 27 - gegen den Einstellring 21 abstützt bzw. an diesem anliegt. In dieser Endlage des Sekundärkolbens 26, bei geöffnetem Schaltelement 2, weisen die Lamellen des ersten.Schaltelementes 2 ein konstruktiv vorgegebenes Lüftspiel 22 auf.

Das zweite Schaltelement 3 ist ähnlich aufgebaut wie das erste Schaltelement 2. Ein getriebegehäusefester Schließdruckraum 34 des zweiten Schaltelementes 3 ist über eine Schließdruckzuführung 35 mit Schließdruck beaufschlagbar, vorzugsweise modulierbar gesteuert über das elektro-hydraulische bzw. elektro-pneumatische Getriebe-Steuergerät, wobei dieser Schließdruck direkt auf einen Kolben 33 des zweiten Schaltelementes 3 wirkt, der dann wiederum auf einen Sekundärkolben 36 des zweiten Schaltelementes 3 wirkt und die Lamellen des zweiten Schaltelementes 3 kraftschüssig schaltet. Der Schließdruckraum 34 wird im dargestellten Ausführungsbeispiel aus dem Kolben 33 und einem topfförmigen Zylinder gebildet, der mit dem Getriebegehäuse 1 fest verbunden ist. In einer anderen Ausführungsform kann der Schließdruckraum 34 des zweiten Schaltelementes 3 auch im dem Getriebegehäuse 1 integriert sein.

Als Rückstellelement des zweiten Schaltelementes 3 ist eine Kombination aus einem Entleerdruckraum 37 und einer Rückstellfeder 39 vorgesehen. Entleerdruckraum 37 und Rückstellfeder 39 wirken parallel und sind beide gemeinsam in einer radialen Ausnehmung 44 an einer zweiten Stirnfläche 43 des Lamellenträgers 4 angeordnet, radial oberhalb der Lamellen des zweiten Schaltelementes 3, also auf größerem Durchmesser als die Lamellen. Der Entleerdruckraum 37 ist über eine Entleerdruck-Zuführung 38 mit Druck beaufschlagbar, vorzugsweise druckmoduliert über das elektro-hydraulische bzw. elektro-pneumatische Getriebe-Steuergerät, beispielsweise in Abhängigkeit der Schaltungsart und/oder der Temperatur.

Der Sekundärkolben 36 des zweiten Schaltelementes 3 weist einen zylinderförmigen Abschnitt auf, der in dieselbe radiale Ausnehmung 44 an der zweiten Stirnfläche 43 des Lamellenträgers 4 axial verschiebbar einmündet, in der auch der Entleerdruckraum 37 und die Rückstellfeder 39 des zweiten Schaltelementes 3 angeordnet sind. Der axiale Verschiebeweg des Sekundärkolbens 36 ist durch einen Einstellring 31 begrenzt, welcher in einer Nut im Lamellenträger 4 im Bereich dessen zweiter Stirnfläche 43 angeordnet ist, derart, daß sich der Sekundärkolben 36 im geöffneten Zustand des zweiten Schaltelementes 3 - infolge der Rückstellkräfte von Entleerdruckraum 37 und Rückstellfeder 39 - in einer Endlage befindet, bei der sich der Sekundärkolben 36 gegen den Einstellring 31 abstützt bzw. liegt an diesem anliegt. In dieser Endlage des Sekundärkolbens 36 weisen die Lamellen des zweiten Schaltelementes 3 ein konstruktiv vorgegebenses Lüftspiel 32 auf.

Eine entsprechende Auslegung der Rückstellfeder 39 vorausgesetzt, ermöglicht die Parallelschaltung von Entleerdruckraum 37 und Rückstellfeder 39 als Rückstellelement für das zweite Schaltelement 3 eine Rückstellung von Sekundärkolben 36 und Kolben 33 auch im drucklosen Zustand des Getriebes, wobei die Federkraft der Rückstellfeder 39 zweckmäßigerweise möglichst niedrig ausgelegt ist. Ebenso unterstützt die Parallelschaltung von Entleerdruckraum 37 und Rückstellfeder 39 eine Differenzdrucksteuerung von Schließdruckraum 34 und Entleerdruckraum 37, insbesondere in Betriebsbereichen der elektro-hydraulischen bzw. elektro-pneumatischen Getriebesteuerung mit ungünstiger Auflösung von Steuergröße zu Druck, beispielsweise bei sehr niedrigem Druckniveau.

Für die Ansteuerungsmöglichkeiten des zweiten Schaltelementes 3 gilt prinzipiell das gleiche wie für die Ansteuerungsmöglichkeiten des ersten Schaltelementes 2.

Durch den beschriebenen konstruktiven Aufbau der beispielhaften Schaltelemnt-Baugruppe kann der Lamellenträger 4 mit den lüftspielmäßig korrekt eingestellten Lamellen beider Schaltelemente 2 und 3, den Rückstellelementen beider Schaltelemente 2 und 3, den Sekundärkolben 26 und 36, sowie den Einstellringen 21 und 31 als eine Baugruppe vormontiert werden. Hierdurch wird die Montage des Getriebes erheblich erleichtert, da ein Einstellen der Lüftspiele 22 und 32 auf die Bauteiltoleranzen des Getriebegehäuses 1 bzw. der Gehäuseteile, die für die beiden Schaltelementen 2 und 3 funktionrelevant sind, nicht mehr erforderlich ist. Außerdem ermöglicht die Ausbildung der Rückstellelemente als hydraulisch bzw. pneumatisch betätigbarer Entleerdruckraum 27, 37 infolge der hohen Energiedichte dieser Betätigung einen sehr kompakten Aufbau der Schaltelement-Baugruppe.

Selbstverständlich können in anderen Ausführungsformen der erfindungsgemäßen Schaltelement-Baugruppe die Rückstellelemente der einzelnen Schaltelemente anderes kombiniert sein. Beispielsweise können beide Schaltelemente jeweils einen hydraulisch bzw. pneumatisch betätigbaren Entleerdruckraum ohne eine Rückstellfeder aufweisen, oder beide Schaltelemente jeweils eine Rückstellfeder zusätzlich zu dem jeweiligen Entleerdruckraum. Auch kann es vorgesehen sein, daß nur einer der beiden Schaltlemente einen hydraulisch bzw. pneumatisch betätigbaren Entleerdruckraum (ohne oder mit zusätzlicher Rückstellfeder) aufweist, während die Kolbenrückstellung des anderen Schaltelementes in konventioneller Weise nur über ein Federelement erfolgt. Auch können die Schaltelemente als Kupplung ausgebildet sein, mit entsprechender konstruktiven Ausgestaltung der Kolben und deren Druckräume.

### Bezugszeichen

- 1: Getriebegehäuse

- 2: erstes Schaltelement
- 20: Außenlamelle des ersten Schaltelementes
- 21: Einstellring des ersten Schaltelementes
- 22: Lüftspiel des ersten Schaltelementes
- 23: Kolben des ersten Schaltelementes
- 24: Schließdruckraum des ersten Schaltelementes
- 25: Schließdruck-Zuführung des ersten Schaltelementes
- 26: Sekundärkolben des ersten Schaltelementes
- 27: Entleerdruckraum (Rückstellelement) des ersten Schaltelementes
- 28: Entleerdruck-Zuführung des ersten Schaltelementes

- 3: zweites Schaltelement
- 30: Außenlamelle des zweiten Schaltelementes
- 31: Einstellring des zweiten Schaltelementes
- 32: Lüftspiel des zweiten Schaltelementes
- 33: Kolben des zweiten Schaltelementes
- 34: Schließdruckraum des zweiten Schaltelementes
- 35: Schließdruck-Zuführung des zweiten Schaltelementes
- 36: Sekundärkolben des zweiten Schaltelementes
- 37: Entleerdruckraum (Rückstellelement) des zweiten Schaltelementes
- 38: Entleerdruck-Zuführung des zweiten Schaltelementes
- 39: Rückstellfeder (Rückstellelement) des zweiten Schaltelementes

- 4: Lamellenträger
- 40: Trennwand des Lamellenträgers
- 41: erste Stirnfläche des Lamellenträgers
- 42: radiale Ausnehmung an der ersten Stirnfläche des Lamellenträgers
- 43: zweite Stirnfläche des Lamellenträgers
- 44: radiale Ausnehmung an der zweiten Stirnfläche des Lamellenträgers

## Patentansprüche

1. Schaltelement-Baugruppe für ein Getriebe, mit zwei in einem Getriebegehäuse (1) angeordneten, axial benachbarten, voneinander unabhängig hydraulisch oder pneumatisch betätigbaren Schaltelementen (2, 3), mit einem gemeinsamen Lamellenträger (4) zur Aufnahme von Außenlamellen (20, 21) oder von Innenlamellen beider Schaltelemente (2, 3), wobei die Lamellen beider Schaltelemente (2, 3) axial benachbart innerhalb des Lamellenträgers (4) angeordnet und durch eine mittige Trennwand (40) des Lamellenträgers (4) voneinander getrennt sind, und wobei jedes Schaltelement (2, 3) zur Betätigung einen Kolben (23, 33) und einen Schließdruckraum (24, 34) aufweist, welche auf der der Trennwand (40) abgewandten Seite der Lamellen des jeweiligen Schaltelementes (2, 3) im Bereich der Stirnflächen (41, 43) des Lamellenträgers (4) angeordnet sind, **dadurch gekennzeichnet, daß** jedes Schaltelement (2, 3) mindestens ein Rückstellelement (27, 37, 39) zur Kolbenrückstellung aufweist, welches in dem Lamellenträger (4) radial oberhalb der Lamellen des jeweiligen Schaltelementes (2, 3) angeordnet ist, daß jedes Schaltelement (2, 3) einen zusätzlichen Sekundärkolben (26, 36) aufweist, welcher über den Kolben (23, 33) des jeweiligen Schaltelementes (2, 3) gegen eine Rückstellkraft des Rückstellelementes (27, 37, 39) des jeweiligen Schaltelementes (2, 3) auf die Lamellen des jeweiligen Schaltelementes (2, 3) wirkt, und daß mindestens ein Rückstellelement (27, 37, 39) der Schaltelement-Baugruppe als hydraulisch bzw. pneumatisch betätigbarer Entleerdruckraum (27, 37) ausgebildet ist.

2. Schaltelement-Baugruppe nach Anspruch 1, **dadurch gekennzeichnet, daß** im Bereich der Stirnflächen (41, 43) des Lamellenträgers (4) in Umfangsrichtung Ausnehmungen (42, 44) vorgesehen sind, in welchen die den Schaltelementen (2, 3) zugeordneten Rückstellelemente (27, 37, 39) angeordnet sind und in welche die den Schaltelementen (2, 3) zugeordneten Sekundärkolben (26, 36) axial verschiebbar einmünden.

3. Schaltelement-Baugruppe nach Anspruch 2, **dadurch gekennzeichnet, daß** im Bereich der Stirnflächen (41, 43) des Lamellenträgers (4) jeweils ein dem jeweiligen Schaltelement (2, 3) zugeordneter Einstellring (21, 31) vorgesehen ist, an dem der Sekundärkolben (26, 36) des jeweiligen Schaltelementes (2, 3) bei geöffnetem Schaltelement (2, 3) anliegt, wobei die Lamellen dieses Schaltelementes (2, 3) dabei ein vorgegebens Lüftspiel (22, 32) aufweisen.

4. Schaltelement-Baugruppe nach Anspruch 1, 2 oder 3, **dadurch gekennzeichnet, daß** der Lamellenträger (4) mit den Lamellen beider Schaltelemente (2, 3), den Sekundärkolben (26, 36) und den Einstellringen (21, 31) als eine Baugruppenteil vormontierbar ist, wobei die Lüftspiele der jeweiligen Lamellen über verschieden breite Einstellringe (21, 31) einstellbar ist.

5. Schaltelement-Baugruppe nach einem der vorigen Ansprüche, **dadurch gekennzeichnet, daß** beide Schaltelemente (2, 3) als Bremse ausgebildet sind, wobei deren gemeinsamer Lamellenträger (4) als Außenlamellenträger ausgebildet ist und mit dem Getriebegehäuse (1) formschlüssig oder kraftschlüssig verbunden ist.

6. Verfahren zur Steuerung der Schaltelement-Baugruppe nach einem der vorigen Ansprüche, **dadurch gekennzeichnet, daß** der Entleerdruckraum (27, 37) von einem elektrohydraulischen Getriebe-Steuergerät mit modulierbarem Druck ansteuerbar ist, insbesondere schaltungsspezifisch und/oder temperaturabhängig.

7. Verfahren zur Steuerung der Schaltelement-Baugruppe nach einem der vorigen Ansprüche, **dadurch gekennzeichnet, daß** beim Öffnen des Schaltelementes (2, 3) dessen Schließdruckraum (24, 34) über mindestens eine Blende entlüftet wird.

8. Verfahren zur Steuerung der Schaltelement-Baugruppe nach einem der vorigen Ansprüche, **dadurch gekennzeichnet, daß** beim Öffnen des Schaltelementes (2, 3) der Druckabbau in dessem Schließdruckraum (24, 34) von dem elektrohydraulischen Getriebe-Steuergerät steuerbar ist, insbesondere schaltungsspezifisch und/oder temperaturabhängig.

9. Verfahren zur Steuerung der Schaltelement-Baugruppe nach einem der vorigen Ansprüche, **dadurch gekennzeichnet, daß** Schließdruckraum (24, 34) und Entleerdruckraum (27, 37) als Differenzdruckraum beim Schließen und/oder beim Öffnen des jeweiligen Schaltelementes (2, 3) druckmoduliert ansteuerbar sind, insbesondere schaltungsabhängig.

## Claims

1. The invention relates to an assembly of shifting elements for a transmission; with two axially adjacent shifting elements (2, 3), which can be independently actuated hydraulically or pneumatically and are located in a transmission housing (1); with a joint disk carrier (4) for the outer disks (20, 21) or the inner disks of both shifting elements (2, 3), with the disks of both shifting elements (2, 3) being arranged axially adjacent within the disk carrier (4) and separated from each other by a centrally located partition wall (40) of the disk carrier (4), and with each shifting element (2, 3) featuring an actuating piston (23, 33) and a closing-pressure chamber (24, 34), which are arranged in the area of the end faces (41, 43) of the disk carrier (4) on the side of the disks of the respective shifting element (2, 3) not facing the partition wall (40), **characterized in that** each shifting element (2, 3) features at least one return element (27, 37, 39) for piston return, which is arranged within the disk carrier (4) radially above the disks of the respective shifting element (2, 3); that each shifting element (2, 3) features an additional secondary piston (26, 36) acting via the piston (23, 33) of the respective shifting element (2, 3) against a return force of the return element (27, 37, 39) of the respective shifting element (2, 3) on the disks of the respective shifting element (2, 3); and that at least one return element (27, 37, 39) of the assembly of shifting elements is designed as a hydraulically or pneumatically controllable discharge-pressure chamber (27, 37).

2. Assembly of shifting elements according to claim 1, **characterized in that** recesses (42, 44) are provided in circumferential direction in the area of the end faces (41, 43) of the disk carrier (4), within which the return elements (27, 37, 39) assigned to the shifting elements (2, 3) are arranged, and into which the secondary pistons (26, 36) assigned to the shifting elements (2, 3) extend.

3. Assembly of shifting elements according to claim 2, **characterized in that** in the area of the end faces (41, 43) of the disk carrier (4), each shifting element (2, 3) has an adjusting ring (21, 31) assigned to it, on which, with the shifting element (2, 3) open, the secondary piston (26, 36) of the respective shifting element (2, 3) abuts, with the disks of this shifting element (2, 3) featuring a preset clearance (22, 32).

4. Assembly of shifting elements according to claim 1, 2 or 3, **characterized in that** the disk carrier (4) with the disks of both shifting elements (2, 3), the secondary pistons (26, 36), and the adjusting rings (21, 31), can be pre-assembled as a subassembly unit, with the clearances of the respective disks being adjustable by means of adjusting rings (21, 31) of varying width.

5. Assembly of shifting elements according to one of the preceding claims, **characterized in that** both shifting elements (2, 3) are designed as brakes, with their joint disk carrier (4) being designed as an outer-disk carrier **characterized by** positive or nonpositive engagement with the transmission housing (1).

6. Method for controlling the assembly of shifting elements according to one of the preceding claims, **characterized in that** the discharge-pressure chamber (27, 37) can be controlled by means of an electrohydraulic TCU applying modulating pressure, especially in a shift-specific and/or temperature-dependent manner.

7. Method for controlling the assembly of shifting elements according to one of the preceding claims, **characterized in that** upon opening of the shifting element (2, 3), its closing-pressure chamber (24, 34) is vented via at least one orifice.

8. Method for controlling the assembly of shifting elements according to one of the preceding claims, **characterized in that** upon opening of the shifting element (2, 3), the pressure reduction in its closing-pressure chamber (24, 34) can be controlled by the electrohydraulic TCU, especially in a shift-specific and/or temperature-specific manner.

9. Method for controlling the assembly of shifting elements according to one of the preceding claims, **characterized in that** upon closing and/or opening of the respective shifting element (2, 3), closing-pressure chamber (24, 34) and discharge-pressure chamber (27, 37) can be controlled as differential-pressure chambers by means of modulating pressure, especially in a shifting-dependent manner.

## Revendications

1. Sous-ensemble d'éléments d'enclenchement pour une boîte de vitesses, avec deux éléments d'enclenchement (2, 3) disposés dans un carter de boîte de vitesses (1), axialement adjacents et pouvant être actionnés indépendamment de manière hydraulique ou pneumatique, avec un support à lamelles (4) commun pour loger des lamelles externes (20, 21) ou des lamelles internes des deux éléments d'enclenchement (2, 3), les lamelles des deux éléments d'enclenchement (2, 3) étant axialement adjacentes à l'intérieur du support à lamelles (4) et séparées les unes des autres par une paroi de séparation centrale (40) du support à lamelles (4), et chaque élément d'enclenchement (2, 3) comprenant, pour l'actionnement, un piston (23, 33) et une chambre de pression de fermeture (24, 34) disposés sur le côté des lamelles de l'élément d'enclenchement (2, 3) correspondant opposé à la paroi de séparation (40), au niveau des faces frontales (41, 43) du support à lamelles (4), **caractérisé en ce que** chaque élément d'enclenchement (2, 3) comprend au moins un élément de rappel (27, 37, 39), pour le retour du piston, qui est disposé dans le support à lamelles (4) radialement au-dessus des lamelles de l'élément d'enclenchement (2, 3) correspondant, **en ce que** chaque élément d'enclenchement (2, 3) comprend un piston secondaire supplémentaire (26, 36) qui agit, par l'intermédiaire du piston (23, 33) de l'élément d'enclenchement (2, 3) correspondant contre une force de rappel de l'élément de rappel (27, 37, 39) de l'élément d'enclenchement (2, 3) correspondant, et **en ce qu'**au moins un élément de rappel (27, 37, 39) du sous-ensemble d'éléments d'enclenchement est conçu comme une chambre de pression de purge (27, 37) pouvant être actionnée de manière hydraulique ou pneumatique.

2. Sous-ensemble d'éléments d'enclenchement selon la revendication 1, **caractérisé en ce que**, au niveau des faces frontales (41, 43) du support à lamelles (4), des évidements (42, 44) sont prévus sur la circonférence, dans lesquels se trouvent les éléments de rappel (27, 37, 39) correspondant aux éléments d'enclenchement (2, 3) et dans lesquels débouchent, de manière mobile axialement, les pistons secondaires (26, 36) correspondant aux éléments d'enclenchement (2, 3).

3. Sous-ensemble d'éléments d'enclenchement selon la revendication 2, **caractérisé en ce que**, au niveau des faces frontales (41, 43) du support à lamelles (4), se trouve une bague de réglage (21, 31), correspondant à l'élément d'enclenchement (2, 3), contre laquelle le piston secondaire (26, 36) de l'élément d'enclenchement (2, 3) correspondant s'appuie lorsque l'élément d'enclenchement (2, 3) est ouvert, les lamelles de cet élément d'enclenchement (2, 3) présentant un jeu de ventilation (22, 32) prédéterminé.

4. Sous-ensemble d'éléments d'enclenchement selon la revendication 1, 2 ou 3, **caractérisé en ce que** le support à lamelles (4) peut-être pré-monté avec les lamelles des deux éléments d'enclenchement (2, 3), les pistons secondaires (26, 36) et les bagues de réglage (21, 31) comme une partie du sous-ensemble, les jeux de ventilation des lamelles correspondantes pouvant être réglés par l'intermédiaire de bagues dé réglage (21, 31) de largeurs différentes.

5. Sous-ensemble d'éléments d'enclenchement selon l'une des revendications précédentes, **caractérisé en ce que** les deux éléments d'enclenchement (2, 3) sont conçus comme des freins, leur support à lamelles (4) commun étant conçu comme un support à lamelles externe et étant relié avec le carter de la boîte à vitesses (1) avec une complémentarité de forme ou avec une transmission de force.

6. Procédé de commande du sous-ensemble d'éléments d'enclenchement selon l'une des revendications précédentes, **caractérisé en ce que** la chambre de pression de purge (27, 37) peut être commandée par un dispositif de commande électro-hydraulique de la boîte de vitesses avec une pression modulée, notamment en fonction de l'enclenchement et/ou de la température.

7. Procédé de commande du sous-ensemble d'éléments d'enclenchement selon l'une des revendications précédentes, **caractérisé en ce que**, lors de l'ouverture de l'élément d'enclenchement (2, 3), sa chambre de pression de fermeture (24, 34) est ventilée par l'intermédiaire d'au moins un diaphragme.

8. Procédé de commande du sous-ensemble d'éléments d'enclenchement selon l'une des revendications précédentes, **caractérisé en ce que**, lors de l'ouverture de l'élément d'enclenchement (2, 3), la diminution de la pression dans sa chambre de pression de fermeture (24, 34) peut être commandée par le dispositif de commande électrohydraulique de la boîte de vitesses, notamment en fonction de l'enclenchement et/ou de la température.

9. Procédé de commande du sous-ensemble d'éléments d'enclenchement selon l'une des revendications précédentes, **caractérisé en ce que** la chambre de pression de fermeture (24, 34) et la chambre de pression de purge (27, 37) peut, en tant que chambre de pression différentielle, être commandée avec une pression modulée, notamment en fonction de l'enclenchement, lors de la fermeture et/ou de l'ouverture de l'élément d'endenchement (2, 3) correspondant.
